# EUROPÄISCHE PATENTSCHRIFT

(11) **EP 2 962 673 B1**
(45) Veröffentlichungstag und Bekanntmachung des Hinweises auf die Patenterteilung: **02.08.2017**
(21) Anmeldenummer: 15171179.3
(22) Anmeldetag: 09.06.2015
(51) Int. Cl.: A61G 13/04, A61G 13/06

(54) **OPERATIONSTISCHSÄULE FÜR EINEN OPERATIONSTISCH**
OPERATION TABLE COLUMN FOR AN OPERATION TABLE
COLONNE DE TABLE D'OPÉRATION POUR TABLE D'OPÉRATION

(30) Priorität: 04.07.2014 DE 102014109375
(43) Veröffentlichungstag der Anmeldung: 06.01.2016
(73) Patentinhaber: Maquet GmbH, 76437 Rastatt (DE)
(72) Erfinder: Koch, Guido, 76149 Karlsruhe (DE)
(74) Vertreter: Zacco GmbH

(56) Entgegenhaltungen:
- DE-A1- 4 341 779
- DE-U- 1 928 624

## Beschreibung

Die Erfindung betrifft eine Operationstischsäule mit einem Grundkörper und mit einem Säulenkopf an dem eine Patientenlagerfläche befestigbar ist. Ferner betrifft die Erfindung einen Operationstisch mit einer solchen Operationstischsäule.

Vor und während einer Operation eines auf der Patientenlagerfläche gelagerten Patienten wird die Patientenlagerfläche in eine Position gebracht, die einen Eingriff am Patienten erleichtert. Dabei kann es erforderlich sein, die Patientenlagerfläche um große Winkel zu verschwenken. Auch die Höhe der Patientenlagerfläche des Operationstisches sollte in einem möglichst großen Bereich einstellbar sein. Idealerweise ermöglicht der Operationstisch auch sehr geringe Höhen der Patientenlagerfläche, was eine platzsparende Bauweise der Operationstischsäule voraussetzt.

Im Krankenhausbetrieb werden üblicherweise drei unterschiedliche Arten von Operationstischen eingesetzt, nämlich stationäre Operationstische, bewegbare Operationstische und mobile Operationstische. Stationäre Operationstische haben eine fest mit dem Fußboden eines Operationssaals verbundene Operationstischsäule, wobei sie üblicherweise keinen Operationstischfuß haben und über fest installierte Kabel mit Energie versorgt werden. Die Patientenlagerfläche ist bei diesen stationären Operationstischen auf einfache Weise lösbar und wieder verbindbar und ist mit einem dafür vorgesehenen Transportgerät verfahrbar. Mit diesem Transportgerät kann ein Patient auf der Patientenlagerfläche zum und aus dem Operationssaal transportiert werden.

Bewegbare Operationstische haben einen mit der Operationstischsäule verbundenen Operationstischfuß, der eine freie Positionierung im Operationssaal ermöglicht, und eine von der Operationstischsäule lösbare und wieder verbindbare Patientenlagerfläche. Das Bewegen der Operationstischsäule erfolgt mittels eines dafür vorgesehenen Säulentransporters oder bei eigenmobilen bewegbaren Operationstischen durch eingebaute, ausfahrbare Transportrollen.

Operationstischfüße mobiler Operationstische haben Rollen zum Verfahren des Operationstisches, so dass sie ohne zusätzliche Hilfsmittel verfahrbar und zum Transport eines Patienten geeignet sind. Des Weiteren ist bei mobilen Operationstischen die Patientenlagerfläche üblicherweise fest mit der Operationstischsäule verbunden und wird im Krankenhausbetrieb nicht von der Operationstischsäule gelöst. Bei mobilen Operationstischen können ferner elektrische Fahrantriebe, vorzugsweise mit Sanftanlauf und Sicherheitsbremsfunktion, eingesetzt werden, um den mobilen Operationstisch mithilfe des elektrischen Fahrantriebs zu verfahren.

Die Energieversorgung der bewegbaren Operationstische und der mobilen Operationstische kann über Akkumulatoren erfolgen, die vorzugsweise im Operationstisch integriert sind, insbesondere in dem Operationstischsäulenfuß oder in der Operationstischsäule angeordnet sind.

Sowohl bei stationären Operationstischen als auch bei bewegbaren Operationstischen und mobilen Operationstischen können elektromotorisch verstellbare Komponenten vorgesehen sein, wie beispielsweise eine in ihrer Länge elektromotorisch veränderbare Operationstischsäule zur Veränderung der Höhe einer auf der Operationstischsäule angeordneten Patientenlagerfläche, ein um zwei orthogonale Achsen verstellbarer Operationstischsäulenkopf zur Veränderung der Neigung und der Kantung der mit dem Operationstischsäulenkopf verbundenen Patientenlagerfläche und/oder elektromotorisch verstellbare Komponenten der Patientenlagerfläche.

Als Neigung wird dabei das Verschwenken der Patientenlagerfläche um eine Drehachse bezeichnet, die orthogonal zu einer vertikalen Ebene ist, in der die Längsachse der Patientenlagerfläche verläuft. Als Kantung wird ein Verschwenken der Patientenlagerfläche um ihre Längsachse oder um eine zur Längsachse der Patientenlagerfläche parallelen Drehachse, die in einer vertikalen und die Längsachse der Patientenlagerfläche enthaltenden Ebene verläuft, bezeichnet. Wenn keine Patientenlagerfläche mit dem Säulenkopf der Operationstischsäule verbunden ist, beziehen sich die Definitionen von Neigung und Kantung auf Verstellungen des Säulenkopfs, wie sie bei einer befestigten Patientenlagerfläche erfolgen würden.

Aus dem Dokument DE 10 2011000 628 A1 ist eine Operationstischsäule bekannt, die drei Stellantriebe zur Verstellung der Kantung und Neigung hat. Die mechanische Ausführung ist dabei recht aufwendig und nimmt großen Bauraum in Anspruch. Die Steifigkeit und Spielfreiheit der Neigungsfunktion wird durch den schwenkbaren Neigungszylinder negativ beeinflusst. Die kinematische Kopplung zwischen Kantungs- und Neigungsfunktion führt zu einer gegenseitigen Beeinflussung dieser Funktionen. Aus dem Dokument DE 196 23 580 C2 ist eine Hubsäule mit drei vertikalen Hubzylindern zur Verstellung einer Patientenlagerfläche bekannt. Aus dem Dokument DE 1 928 624 U ist ein Patientenlagerungstisch für endoskopische Untersuchungen bekannt. Ausgehend von dem bekannten Stand der Technik ist es Aufgabe der Erfindung eine Operationstischsäule anzugeben, die bei einem einfachen Aufbau große Verstellbereiche der Neigung, der Kantung und/oder der Höhe des Säulenkopfs der Operationstischsäule ermöglicht.

Diese Aufgabe wird durch eine Operationstischsäule mit den Merkmalen des Anspruchs 1 gelöst. Vorteilhafte Weiterbildungen der Erfindung sind in den abhängigen Ansprüchen angegeben.

Durch eine Operationstischsäule mit den Merkmalen des Anspruchs 1 kann der Säulenkopf bzw. eine mit diesem verbundene Patientenlagerfläche durch unterschiedliche Stellbewegungen geneigt oder dessen bzw. deren Kantung verändert werden. Zusätzlich kann bei einer gleichzeitigen Stellbewegung der Linearstellantriebe in dieselbe Verstellrichtung der Säulenkopf in seiner Höhe verändert, d.h. angehoben bzw. abgesenkt werden, ohne dass die Kantung oder Neigung verändert wird.

Außer den beiden Linearstellantrieben ist keine weitere zur Kraftübertragung erforderliche mechanische Verbindung zwischen Säulenkopf und Grundkörper vorgesehen. Neben dem dadurch vereinfachten Aufbau der Operationstischsäule hat dies den Vorteil, dass lediglich eine einfache Verkleidung des Säulengrundkörpers mit zwei Durchlässen für die zwei Linearstellantriebe erforderlich ist. Ferner ist ein Durchlass für eine Verbindung zur Energie- und Signalübertragung in der Verkleidung des Säulengrundkörpers vorgesehen. Ein Faltenbalg, wie er bei den meisten im Stand der Technik bekannten Operationstischen zur Abdeckung des Säulengrundkörpers erforderlich ist, kann entfallen. Dadurch, dass der erste und/oder der zweite Linearstellantrieb alle um eine Verbindungslinie zwischen dem ersten Verbindungsbereich und dem zweiten Verbindungsbereich wirkenden Drehmomente, vorzugsweise zum Grundkörper der Operationstischsäule, übertragen, können insbesondere die bei der Kantung der Patientenlagerfläche auftretenden Kippmomente sicher aufgenommen werden. Besonders vorteilhaft ist es, wenn die beiden Linearstellantriebe mit dem Grundkörper mechanisch fest verbunden sind. Dadurch wird der Aufbau weiter vereinfacht. Ferner wird eine hohe Stabilität bei geringen Produktionskosten erreicht. Das Anheben des Säulenkopfs kann bei dieser Ausbildung auch einfach über ein gleichzeitiges Ausfahren des ersten und des zweiten Linearstellantriebs erfolgen.

Weiterhin ist vorteilhaft, wenn die Linearstellantriebe jeweils eine ausschließlich vertikale Stellbewegung, d.h. eine Verstellbewegung parallel zur senkrechten Längsachse der Operationstischsäule, ausführen. Dies wird insbesondere dadurch erreicht, dass der erste Linearstellantrieb und der zweite Linearstellantrieb derart ausgerichtet und angeordnet sind, dass ihre Längsachsen bei allen ihren Stellbewegungen parallel sind. Die Stellbewegungen verlaufen dabei vorzugsweise jeweils entlang der Längsachsen des ersten Linearstellantriebs und des zweiten Linearstellantriebs. Vorzugsweise verbindet die Längenausgleichsanordnung den ersten Verbindungsbereich des ersten Linearstellantriebs mit dem zweiten Verbindungsbereich des zweiten Linearstellantriebs. Die Längenausgleichsanordnung ist dabei vorzugsweise so ausgebildet, dass eine Änderung des Abstandes zwischen dem ersten Verbindungsbereich und dem zweiten Verbindungsbereich in Folge einer unterschiedlichen Stellbewegung des ersten und zweiten Linearstellantriebs passiv erfolgt. Die Bezeichnungen Kantung und Neigung sind bereits in der Beschreibungseinleitung erläutert worden und werden in der gesamten Beschreibung und in den Ansprüchen entsprechend dieser Erläuterung verwendet.

Der erste und der zweite Linearstellantrieb können beispielsweise als Hydraulikzylinder oder als elektromotorisch angetriebener Spindeltrieb ausgeführt sein.

Ferner ist es vorteilhaft, wenn beide Linearstellantriebe mit einem höhenverstellbaren Teil des Grundkörpers verbunden sind. Der Gesamthöhenverstellbereich ist dann die Summe der Höhenverstellung des Grundkörpers und der durch die Linearantriebe bewirkbaren Höhenverstellung. Zur Höhenverstellung des höhenverstellbaren Teils des Grundkörpers ist ein weiterer Stellantrieb, vorzugsweise ein Hydraulikzylinder oder ein elektromotorisch angetriebener Spindeltrieb, vorgesehen. Ein Spindeltrieb ist ein Getriebe mit einer Gewindespindel, das eine rotatorische Bewegung in eine translatorische Bewegung umwandelt. Dadurch ist ein relativ großer Höhenverstellbereich möglich.

Des Weiteren ist es vorteilhaft, wenn der Säulenkopf eine Schwenkeinheit zum Schwenken einer mit dem Säulenkopf verbundenen oder verbindbaren Patientenlagerfläche im verbundenen Zustand hat. Dabei ist die Schwenkeinheit um mindestens eine erste Schwenkachse und um eine zweite Schwenkachse schwenkbar. Die erste Schwenkachse und die zweite Schwenkachse sind bei einer Projektion auf eine horizontale Ebene senkrecht zueinander. Ebenso sind die Längsachse der Patientenlagerfläche und die erste Schwenkachse bei einer Projektion auf eine horizontale Ebene senkrecht zueinander. Dadurch ist es möglich, die Patientenlagerfläche um zwei Hauptachsen zu verschwenken, so dass die Kantung und die Neigung der Patientenlagerfläche einfach eingestellt werden können.

Besonders vorteilhaft ist es, wenn die Längsachse des ersten Linearstellantriebs und die Längsachse des zweiten Linearstellantriebs in Richtung der Längsachse der Patientenlagerfläche beabstandet sind und vorzugsweise einen Abstand im Bereich von 10 cm bis 50 cm haben. Bei Patientenlagerflächen, bei denen keine natürliche Definition einer Längsachse möglich ist, wird die Längsachse der Patientenlagerfläche als Parallele zur Mittelachse eines nach bestimmungsgemäßem Gebrauch darauf mittig liegenden Patienten definiert. Vorzugsweise liegt der Schwerpunkt der Patientenlagerfläche auf deren Längsachse. Dadurch wirken keine oder nur geringe Drehmomente für eine Drehung um die Längsachse der Patientenlagerfläche auf die mechanischen Elemente der Operationstischsäule.

Ferner sieht die Erfindung vor, den Säulenkopf über ein erstes Drehlager im ersten Verbindungsbereich mit dem oberen Ende des ersten Linearstellantriebs um eine erste Drehachse schwenkbar mechanisch zu verbinden und den Säulenkopf über ein zweites Drehlager im zweiten Verbindungsbereich mit dem oberen Ende des zweiten Linearstellantriebs um eine zweite Drehachse schwenkbar mechanisch zu verbinden. Dabei sind die erste Drehachse und die zweite Drehachse parallel. Dadurch kann der Säulenkopf um eine Drehachse geschwenkt werden, die parallel zu den Drehachsen des ersten und des zweiten Drehlagers ist oder, je nach Ansteuerung der Linearstellantriebe, mit einer dieser Drehachsen übereinstimmt, wobei die Längenausgleichsanordnung den sich ändernden Abstand zwischen dem ersten Drehlager und dem zweiten Drehlager ausgleicht. Das erste und das zweite Drehlager befinden sich somit vorzugsweise jeweils an der Schnittstelle des ersten und des zweiten Linearstellantriebs mit dem Säulenkopf. Als oberes Ende des ersten Linearstellantriebs wird das dem Säulenkopf zugewandte Ende des ersten Linearstellantriebs bezeichnet. Als oberes Ende des zweiten Linearstellantriebs wird das dem Säulenkopf zugewandte Ende des zweiten Linearstellantriebs bezeichnet. Durch diese Weiterbildung ist es möglich, das bei einer Neigungsverstellung auftretende Verschwenken des Säulenkopfes relativ zu den Linearstellantrieben durch einfach aufgebaute, stabile mechanische Drehelemente zu realisieren.

Besonders vorteilhaft ist es auch, wenn die Längenausgleichsanordnung einen Stab und ein Element mit einer Öffnung umfasst, in die ein Ende des Stabes zum Ändern des Abstandes zwischen dem ersten Verbindungsbereich und dem zweiten Verbindungsbereich bei einer Stellbewegung des ersten Linearstellantriebs und/oder des zweiten Linearstellantriebs hineinschiebbar und herausziehbar ist. Eine an dem Säulenkopf befestigbare Patientenlagerfläche ist dabei um die Längsachse des Stabes schwenkbar. Das Element mit einer Öffnung kann ein auf dem Stab verschiebbares Lagerauge sein, wobei das Lagerauge den Stab insbesondere umgreift oder umschließt. In einer besonders bevorzugten Ausführungsform ist das Stabsystem nicht durchgängig zwischen beiden Drehlagern ausgebildet. Erfindungsgemäß hat der Säulenkopf mindestens ein Stützelement, das fest mit dem gegenüber dem ersten Linearstellantrieb drehbaren Teil des ersten Drehlagers verbunden und um die erste Drehachse schwenkbar ist, so dass es zusammen mit dem Kopf um das erste Drehlager verschwenkt wird. Das Stützelement hat mindestens einen dritten Verbindungsbereich zum Verbinden des Stützelements mit einem ersten Ende eines dritten Linearstellantriebs. Vorzugsweise steht ein dem ersten Ende gegenüberliegendes zweites Ende des dritten Linearstellantriebs mit der Schwenkeinheit des Säulenkopfs in Wirkverbindung.

Das zweite Ende des dritten Linearstellantriebs ist vorzugsweise um eine das obere Ende des ersten Linearstellantriebs und das obere Ende des zweiten Linearstellantriebs verbindende Achse oder um eine zu dieser Achse parallelen Achse schwenkbar. Beim Ausfahren und beim Einfahren des dritten Linearstellantriebs und einer daraus resultierenden Verstellung der Kantung bewegt sich das zweite Ende des dritten Linearstellantriebs auf einer Kreisbahn um die das obere Ende des ersten Linearstellantriebs und das obere Ende des zweiten Linearstellantriebs verbindende Achse oder um eine zu dieser Achse parallelen Achse.

Durch die vorstehend beschriebene Weiterbildung können sowohl die Neigung als auch die Kantung einer mit dem Säulenkopf verbundenen Patientenlagerfläche einfach und exakt eingestellt werden. Als Wirkverbindung wird in diesem Zusammenhang insbesondere angesehen, dass bei einer Bewegung des zweiten Endes des dritten Linearstellantriebs eine davon abhängige Bewegung der Schwenkeinheit erfolgt. Alternativ oder zusätzlich kann das Stützelement um die erste Drehachse des ersten Drehlagers oder die zweite Drehachse des zweiten Drehlagers schwenkbar sein.

Vorzugsweise ist auch das erste Ende des dritten Linearstellantriebs derart schwenkbar mit dem dritten Verbindungsbereich des Stützelementes verbunden, dass sich die Längsachse des dritten Linearstellantriebs während einer Stellbewegung des dritten Linearstellantriebs ohne gleichzeitige Neigungsverstellung des Säulenkopfes immer in einer Ebene befindet. Der dritte Linearstellantrieb wird dabei um eine Schwenkachse geschwenkt, die bei einer Projektion auf eine horizontale Ebene zu der Projektion der Drehachse des Stützelements auf diese Ebene orthogonal ist.

Alternativ zur schwenkbaren Verbindung zwischen dem ersten Ende des dritten Linearstellantriebs und dem Stützelement kann eine zweite Längenausgleichsanordnung zwischen Stützelement und Säulenkopf angeordnet sein.

Die Anordnung aus zwei vertikalen Linearstellantrieben für die Neigung und mindestens einem Linearstellantrieb für die Kantung, wie vorstehend beschrieben, ermöglicht in vorteilhafter Weise die Kantung des Säulenkopfs, ohne den dafür notwendigen Antrieb durch die Abdeckung des Säulengrundkörpers führen zu müssen. Dadurch ist keine aufwändige Abdeckung, wie beispielsweise ein Faltenbalg, erforderlich, wodurch auch die Reinigung der Operationstischsäule einfach möglich ist. Des Weiteren ist die Kantungsfunktion von der Neigungsfunktion entkoppelt. Dadurch kann die richtige Winkeleinstellung der Neigung und der Kantung vom Bedienpersonal in besonders einfacher Weise eingestellt und ein hoher Steuerungs- und Überwachungsaufwand vermieden werden.

Besonders vorteilhaft ist es, wenn das Stützelement einen vierten Verbindungsbereich zum Verbinden eines ersten Endes eines vierten Linearstellantriebs hat, wobei das erste Ende des vierten Linearstellantriebs mit dem vierten Verbindungsbereich und ein dem ersten Ende des vierten Linearstellantriebs gegenüberliegendes zweites Ende des vierten Linearstellantriebs mit der Schwenkeinheit in Wirkverbindung steht. Vorzugsweise sind der dritte Verbindungsbereich des Stützelements und das erste Ende des dritten Linearstellantriebs über ein drittes Drehlager verbunden. Ferner sind der vierte Verbindungsbereich des Stützelements und das erste Ende des vierten Linearstellantriebs über ein viertes Drehlager verbunden. Die Schwenkachsen des dritten und des vierten Drehlagers sind parallel.

Mit Hilfe dieser Anordnung wird eine Verstellung der Kantung des Säulenkopfs an zwei Angriffspunkten des Säulenkopfs möglich. Ferner können der dritte und der vierte Linearstellantrieb als einfach wirkende Hydraulikzylinder ausgeführt sein, so dass eine platzsparende Anordnung möglich ist. Des Weiteren sind Anforderungen an die Stabilität des dritten und des vierten Linearstellantriebs geringer als beim Vorsehen nur eines Stellantriebs.

Alternativ ist es vorteilhaft, wenn der Säulenkopf ein zweites Stützelement hat, das fest mit dem gegenüber dem zweiten Linearstellantrieb drehbaren Teil des zweiten Drehlagers verbunden und um die zweite Drehachse schwenkbar ist, so dass es zusammen mit dem Kopf um das zweite Drehlager verschwenkt wird. Das zweite Stützelement hat einen vierten Verbindungsbereich zum Verbinden eines ersten Endes des vierten Linearstellantriebs. Somit ist das erste Ende des dritten Linearstellantriebs mit dem Stützelement und das erste Ende des vierten Linearstellantriebs mit dem zweiten Stützelement verbunden. Dadurch werden bei einem hohen auf den Säulenkopf wirkenden Drehmoment Anteile des Drehmoments sowohl in den ersten als auch in den zweiten Linearstellantrieb eingeleitet. Dadurch werden eine zusätzliche Stabilisierung des Säulenkopfs und eine Entlastung der Drehlager sowie eine geringere Belastung des ersten bzw. zweiten Linearstellantriebs erreicht.

Besonders vorteilhaft ist es, wenn die Längsachse des ersten Linearstellantriebs und die Längsachse des zweiten Linearstellantriebs in einer vertikalen Ebene liegen, und wenn der dritte Verbindungsbereich zur Verbindung mit dem unteren ersten Ende des dritten Linearstellantriebs auf einer ersten Seite in einem ersten Abstand zu dieser vertikalen Ebene und der vierte Verbindungsbereich zur Verbindung mit dem unteren ersten Ende des vierten Linearstellantriebs auf einer der ersten Seite gegenüberliegenden zweiten Seite in einem zweiten Abstand zu dieser vertikalen Ebene angeordnet ist. Der erste Abstand und der zweite Abstand sind vorzugsweise gleich groß. Bei dieser Ausführung ist es in vorteilhafter Weise möglich den dritten und/oder vierten Linearstellantrieb als einfach wirkende Zylinder auszuführen, und dadurch auf einfache Weise die Kantung einer Patientenlagerfläche einzustellen.

Besonders vorteilhaft ist ferner, wenn der dritte Linearstellantrieb und/oder der vierte Linearstellantrieb als einfach wirkende Hydraulikzylinder, vorzugsweise Plungerzylinder, ausgeführt sind. Dadurch ist ein einfacher und günstiger Aufbau möglich.

Ferner ist es vorteilhaft, wenn der erste Linearstellantrieb, der zweite Linearstellantrieb und/oder der dritte Linearstellantrieb als ein doppelt wirkender Zylinder ausgeführt sind. Bei Patienten, die so weit ausgelagert sind, dass sich ihr Schwerpunkt nicht mehr in einem Bereich zwischen dem ersten und dem zweiten Linearstellantrieb befindet, wird einer dieser Zylinder auf Zug belastet. Entsprechend wird bei in Querrichtung ausgelagerten Patienten, bei denen sich der Schwerpunkt außerhalb des Bereichs zwischen dem dritten und dem vierten Linearstellantrieb befindet, einer dieser Zylinder auf Zug belastet. Durch die Ausführung als doppelt wirkende Zylinder können auch die dann auftretenden Zugkräfte von dem entsprechenden Zylinder aufgenommen werden.

Besonders vorteilhaft ist es, wenn die Operationstischsäule Teil eines Operationstisches ist und an dem Säulenkopf eine Patientenlagerfläche befestigbar ist. Vorteilhaft ist ferner die Ausführung des Operationstisches als stationärer, bewegbarer oder mobiler Operationstisch. Durch die Ausführung der Operationstischsäule als Teil eines Komplettsystems werden die typischen Bedürfnisse eines Operateurs erfüllt und die Stabilität des Gesamtsystems sichergestellt.

Weitere Merkmale und Vorteile der Erfindung ergeben sich aus der nachfolgenden Beschreibung, die die Erfindung anhand von Ausführungsbeispielen im Zusammenhang mit den beigefügten Figuren näher erläutert.

Es zeigen:
- Figur 1: eine schematische Darstellung eines Operationstischs mit einer Operationstischsäule gemäß einer ersten Ausführungsform der Erfindung;
- Figur 2: eine detaillierte Darstellung der Operationstischsäule nach Figur 1 mit einem Grundkörper und einem Säulenkopf, der um eine horizontale und zur Längsachse einer nicht dargestellten Patientenlagerfläche orthogonal verlaufende Achse zur Neigungsverstellung und um eine zur Längsachse der nicht dargestellten Patientenlagerfläche zur Kantungsverstellung verschwenkt wurde;
- Figur 3: eine detaillierte Darstellung eines Ausschnitts der Operationstischsäule nach Figur 2 mit dem Säulenkopf, der ein Stützelement mit einem dritten und einem vierten Verbindungsbereich hat, wobei der Säulenkopf gegenüber der in Figur 1 gezeigten Neutralstellung um eine zur Längsachse der Patientenlagerfläche parallelen Achse verschwenkt wurde;
- Figur 4: eine detaillierte Darstellung der Operationstischsäule nach den Figuren 2 und 3, wobei der Säulenkopf gegenüber Figur 2 in entgegengesetztem Drehsinn geneigt wurde;
- Figur 5: Linearstellantriebe der Operationstischsäule nach den Figuren 2 bis 4 zur Verstellung der Kantung und der Neigung;
- Figur 6: die Operationstischsäule nach den Figuren 2 bis 5, bei der eine Höhenverstellung durch gleichzeitiges Aktivieren der zur Neigungsverstellung dienenden Linearstellantriebe erfolgt ist;
- Figur 7: eine detaillierte Darstellung des Operationstischs nach den Figuren 1 bis 6 ohne Polsterauflagen und Anbauelemente; und
- Figur 8: Linearstellantriebe einer Operationstischsäule gemäß einer zweiten Ausführungsform, bei der im Unterschied zur ersten Ausführungsform nur ein Linearstellantrieb zum Einstellen der Kantung vorgesehen ist.

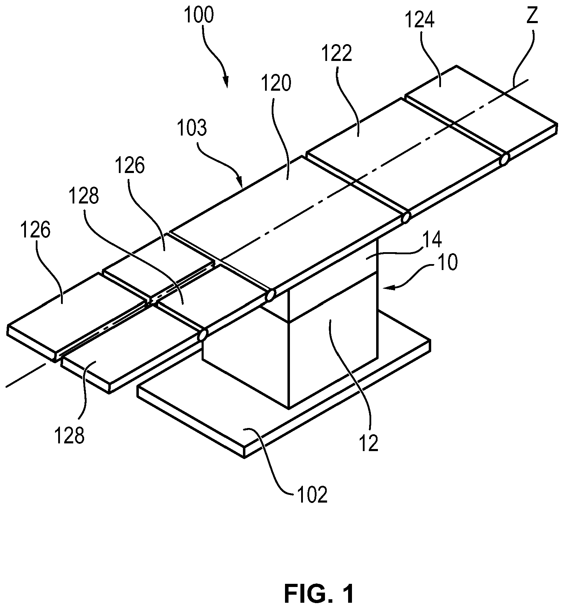

Figur 1 ist eine schematische Darstellung eines Operationstischs 100 gemäß einer ersten Ausführungsform der Erfindung mit einem Fuß 102, einer Operationstischsäule 10 und einer Patientenlagerfläche 103.

Die Patientenlagerfläche 103 hat mehrere in ihrer Lage zueinander verstellbare Komponenten, die eine unterschiedliche Positionierung eines nicht dargestellten Patienten ermöglichen. Im vorliegenden Ausführungsbeispiel hat die Patientenlagerfläche 103 eine Sitzplatte 120, eine Rückenplatte 122, eine Kopfplatte 124, eine zweiteilige rechte Beinplatte 126 und eine zweiteilige linke Beinplatte 128. Die mit Hilfe einer Strichlinie angedeutete Längsachse der Patientenlagerfläche ist mit Z bezeichnet.

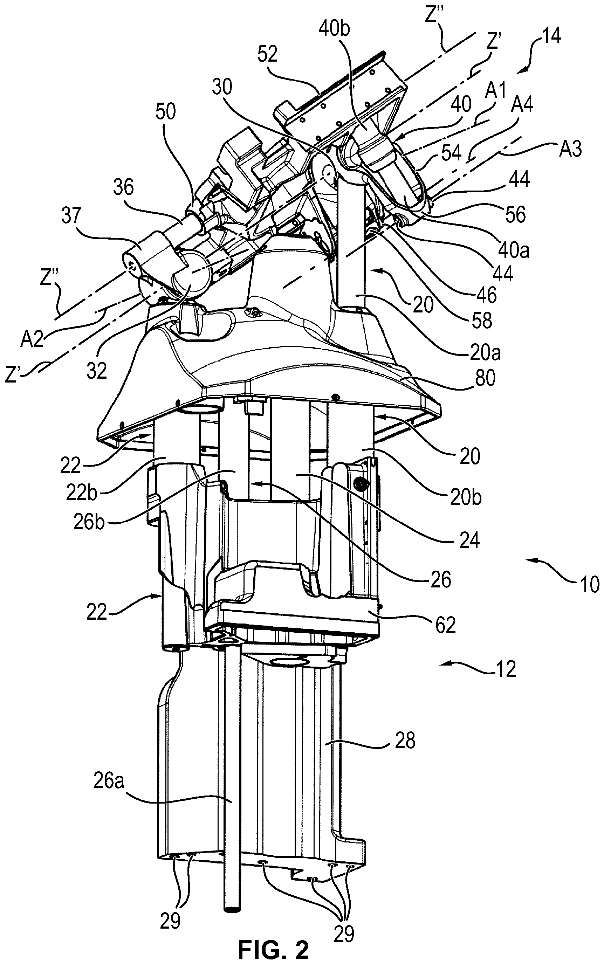

In Figur 2 ist die Operationstischsäule 10 in einer detaillierten Darstellung ohne die in Figur 1 sichtbaren äußeren Verkleidungselemente gezeigt. Elemente mit gleichem Aufbau oder gleicher Funktion haben gleiche Bezugszeichen. Die Operationstischsäule 10 hat einen Grundkörper 12 und den Säulenkopf 14, der um eine horizontale und zur Längsachse einer nicht dargestellten Patientenlagerfläche 103 orthogonal verlaufende Achse zur Neigungsverstellung verschwenkt wurde. Darüber hinaus wurde der Säulenkopf 14 um die Drehachse Z" zur Kantungsverstellung verschwenkt.

Über einen an der Unterseite des Grundkörpers 12 vorgesehenen Flansch 29 ist der Grundkörper 12 fest mit dem Fuß 102 verbunden. Der Säulenkopf 14 ist fest oder längsverschiebbar mit Antriebs- und Halteelementen der Sitzplatte 120 und der Rückenplatte 122 der Patientenlagerfläche 103 verbunden. Bei anderen Ausführungsbeispielen kann der Säulenkopf 14 auch koppelbar und wieder lösbar mit der Patientenlagerfläche 103 verbunden sein.

Zu einer ersten Stufe einer Höhenverstellung des Säulenkopfs 14 ist ein Hubschlitten vorgesehen, der durch einen Hubzylinder 26 in vertikaler Richtung bewegt werden kann. Der Hubschlitten hat ein unteres Teil 62 und ein oberes Teil 80. Bei anderen Ausführungsformen kann zum Antrieb des Hubschlittens anstelle des Hubzylinders 26 auch ein anderer Linearstellantrieb, insbesondere ein Gewindespindelantrieb, vorgesehen sein. Als Hubzylinder 26 wird ein doppelt wirkender hydraulischer Zylinder eingesetzt, dessen Längsachse vertikal verläuft. Die Kolbenstange 26a des Hydraulikzylinders 26 wird aus dem Zylinderrohr 26b des Hubzylinders 26 bei einer entsprechenden Druckbeaufschlagung herausgedrückt bzw. in dieses hineinbewegt. Das untere Ende der Kolbenstange 26a ist dabei, vorzugsweise über eine Schraubverbindung, fest mit dem Fuß 102 des Operationstischs 100 verbunden. Das untere Ende des Zylinderrohrs 26b ist fest mit dem unteren Teil 62 des Hubschlittens und das obere Ende des Zylinderrohrs 26b ist fest mit dem oberen Teil 80 des Hubschlittens verbunden. Bei einer Relativbewegung der Kolbenstange 26a zum Zylinderrohr 26b erfolgt eine vertikale Bewegung des Zylinderrohrs 26b zusammen mit dem Hubschlitten. Der Hubschlitten hat einen Führungsstab 24 der das obere Teil 80 des Hubschlittens und das untere Teil 62 des Hubschlittens fest miteinander verbindet. Die vertikale Bewegung des Hubschlittens ist durch den Hubzylinder 26 und durch den Führungsstab 24 geführt. Hierzu ist der Führungsstab 24 durch eine in Figur 2 nicht sichtbare im Grundkörper 12 vorgesehene Führungsbuchse geführt. Die Längsachse des Zylinderrohrs 26 und des Führungsstabs 24 sind vertikal und somit parallel. Durch die Anordnung des Hubzylinders 26 und des Führungsstabs 24 sowie des Hubschlittens lässt sich der Hubschlitten bis in den Bereich des Fußes 102 des Operationstischs 100 hinein, d.h. bis unterhalb des Grundkörpers 12, absenken. Der Hubschlitten ist in Figur 2 in einer oberen Endposition dargestellt.

Mit dem unteren Teil 62 des Hubschlittens ist ein unteres erstes Ende eines Zylinderrohrs 20b eines als Hydraulikzylinder ausgeführten ersten Linearstellantriebs 20 fest verbunden. In einem Abstand zum ersten Ende des Zylinderrohrs 20b ist ein unteres erstes Ende eines Zylinderrohrs 22b eines als Hydraulikzylinder ausgeführten zweiten Linearstellantriebs 22 fest verbunden. Mit dem oberen Teil 80 des Hubschlittens ist ein oberes zweites Ende des Zylinderrohrs 20b fest verbunden. In einem Abstand zum zweiten Ende des Zylinderrohrs 20b ist ein oberes zweites Ende des Zylinderrohrs 22b fest verbunden. Hierbei sind die unteren und oberen Enden der Zylinderrohre 20b, 22b fest im Hubschlitten eingespannt, sodass die Lage der Längsachsen der Linearstellantriebe 20, 22 relativ zum Hubschlitten nicht veränderbar ist. Die Längsachsen der Linearstellantriebe 20, 22 sind in einem Abstand zueinander vertikal angeordnet. Die unteren Enden der Zylinderrohre 20b, 22b befinden sich auf derselben horizontalen Ebene. Das obere Ende einer Kolbenstange 20a des ersten Linearstellantriebs 20 ist in einem ersten Verbindungsbereich über ein erstes Drehlager 30 mit dem Säulenkopf 14 verbunden und das obere Ende einer Kolbenstange 22a des zweiten Linearstellantriebs 22 ist in einem zweiten Verbindungsbereich über ein zweites Drehlager 32 mit dem Säulenkopf 14 verbunden. Das erste Drehlager 30 definiert eine Drehachse A1 und das zweite Drehlager 32 definiert eine Drehachse A2, wobei die Drehachsen A1, A2 horizontal und parallel sind. Die Drehachsen A1, A2 sind zu einer zur Längsachse Z der Patientenlagerfläche 103 parallelen Längsachse Z' orthogonal. Mit Hilfe der Linearstellantriebe 20, 22 sind sowohl die Neigung der Patientenlagerfläche 103 als auch die Höhe des Säulenkopfs 14 alternativ oder zusätzlich zu dem Hubschlitten änderbar.

Der Säulenkopf 14 umfasst einen Dreh- und Schiebebolzen 36, der mit Hilfe des zweiten Drehlagers 32 um die Drehachse A2 relativ zum zweiten Linearstellantrieb 22 schwenkbar ist, wobei ein erstes Ende des Dreh- und Schiebebolzens 36 über eine Aufnahmebuchse 37 fest mit dem zweiten Drehlager 32 verbunden ist. Der Säulenkopf 14 hat eine Schwenkeinheit 52 mit einer Lagerbuchse 50, durch die das dem ersten Ende gegenüberliegende zweite Ende des Dreh- und Schiebebolzens 36 hindurchgeführt ist, wobei sich die Lagerbuchse 50 in Richtung der Längsachse des Dreh- und Schiebebolzens 36, d.h. in axialer Richtung, frei auf diesem bewegen kann. Ferner kann die Lagerbuchse 50 frei um den Dreh- und Schiebebolzen 36 drehen. Durch diese Anordnung ist die Schwenkeinheit 52 um eine Drehachse Z" gegenüber den Drehlagern 30, 32 und den Linearstellantrieben 20, 22 drehbar.

Die Schwenkeinheit 52 dient zur Verbindung des Säulenkopfs 14 mit der Patientenlagerfläche 103 und zum Verschwenken der Patientenlagerfläche 103, wenn diese mit der Schwenkeinheit 52 verbunden ist. Die Schwenkeinheit 52 ist mit dem ersten Drehlager 30 derart verbunden, dass sie um die Drehachse A1 des ersten Drehlagers 30 relativ zum ersten Linearstellantrieb 20 schwenkbar und axial fixiert ist. Der Dreh- und Schiebebolzen 36 und die Lagerbuchse 50 bilden ein Gleitlager, das sowohl eine Drehung der Schwenkeinheit 52 um den Dreh- und Schiebebolzen 36 zur Veränderung der Kantung der Patientenlagefläche 103 als auch einen Längenausgleich bei nicht parallelem Ausfahren des ersten Linearstellantriebs 20 und des zweiten Linearstellantriebs 22 ermöglicht, so dass Dreh- und Schiebebolzen 36 und Lagerbuchse 50 relativ zueinander bewegliche Teile einer Längenausgleichsanordnung zwischen dem oberen Ende des ersten Linearstellantriebs 20 und dem oberen Ende des zweiten Linearstellantriebs 22 sind. Das erste Drehlager 30 und das zweite Drehlager 32 sind somit über den Dreh- und Schiebebolzen 36 und die Lagerbuchse 50 miteinander verbunden.

Zur Neigungsverstellung der Schwenkeinheit 52 wurde der erste Linearstellantrieb 20 ausgefahren und der zweite Linearstellantrieb 22 in einer eingefahrenen Position belassen. Dabei wurde die Schwenkeinheit 52 zusammen mit der Lagerbuchse 50 auf dem Dreh- und Schiebebolzen 36 so verfahren, dass die Schwenkeinheit 52 sich von dem zweiten Drehlager 32 entfernt hat.

Ein Stützelement 54 ist mit dem ersten Drehlager 30 derart fest verbunden, dass es zusammen mit dem Säulenkopf 14 um die Drehachse A1 verschwenkt wird. Das Stützelement 54 ist so ausgebildet, dass das untere Ende des ersten Arms einen dritten Verbindungsbereich 56 und das untere Ende des zweiten Arms einen vierten Verbindungsbereich 58 hat. Der erste Arm des Stützelements 54 erstreckt sich vom ersten Drehlager 30 von der vertikalen Ebene weg schräg nach unten. Der zweite Arm des Stützelements 54 erstreckt sich vom ersten Drehlager 30 von der vertikalen Ebene weg auf die gegenüberliegende Seite schräg nach unten.

Der dritte Verbindungsbereich 56 ist in einem Abstand zur ersten Seite einer vertikalen Ebene, die die Längsachsen des ersten Linearstellantriebs 20 und des zweiten Linearstellantriebs 22 sowie vorzugsweise die Längsachse Z' enthält und der vierte Verbindungsbereich 58 in einem Abstand zur zweiten Seite der vorstehenden Ebene angeordnet, wobei die Abstände denselben Betrag haben.

Der dritte Verbindungsbereich 56 und das untere Ende des dritten Linearstellantriebs 40 bilden ein drittes Drehlager 44. Der vierte Verbindungsbereich 58 und das unteren Ende des in Figur 2 nicht sichtbaren vierten Linearstellantriebs bilden ein viertes Drehlager 46.

Der dritte Linearstellantrieb 40 ist durch das dritte Drehlager 44 um eine Drehachse A3 schwenkbar. Das durch das obere Ende des Zylinderrohrs 40b gebildete zweite obere Ende des dritten Linearstellantriebs 40 ist mit der Schwenkeinheit 52 über ein weiteres Drehlager um eine zur dritten Drehachse A3 parallelen Drehachse schwenkbar verbunden, sodass bei einer Betätigung des dritten Linearstellantriebs 40 die Schwenkeinheit 52 um die Drehachse Z" geschwenkt wird. Der dritte Linearstellantrieb 40 ist bei dieser ersten Ausführungsform als einfach wirkender Hydraulikzylinder ausgeführt, der derart angeordnet ist, dass die Kolbenstange 40a durch eine Druckbeaufschlagung aktiv aus dem Zylinderrohr 40b herausgedrückt wird. Dadurch wird die Schwenkeinheit 52 bei einer Druckbeaufschlagung des dritten Linearstellantriebs 40 in eine erste Richtung um die Drehachse Z" gedreht.

Der vierte Linearstellantrieb ist durch das vierte Drehlager 46 um eine zur Drehachse A3 und zur vertikalen Ebene parallelen vierten Drehachse A4 schwenkbar. Das durch das obere Ende des Zylinderrohrs gebildete zweite obere Ende des vierten Linearstellantriebs ist mit der Schwenkeinheit 52 über ein weiteres Drehlager um eine zur vierten Drehachse A4 parallelen Drehachse schwenkbar verbunden, sodass bei einer Betätigung des vierten Linearstellantriebs die Schwenkeinheit 52 um die Drehachse Z" geschwenkt wird. Auch der vierte Linearstellantrieb ist bei dieser ersten Ausführungsform als einfach wirkender Hydraulikzylinder ausgeführt, der derart angeordnet ist, dass dessen Kolbenstange durch eine Druckbeaufschlagung aktiv aus dem Zylinderrohr herausgedrückt wird. Dadurch wird die Schwenkeinheit 52 bei einer Druckbeaufschlagung des vierten Linearstellantriebs in eine zur ersten Richtung entgegengesetzten zweiten Richtung um die Drehachse Z" gedreht. Zur Kantungsverstellung wurde der dritte Linearstellantrieb 40 ausgefahren und der vierte Linearstellantrieb zusammengedrückt, so dass die Schwenkeinheit 52 um die Drehachse Z" von dem Beobachter weg gedreht wurde.

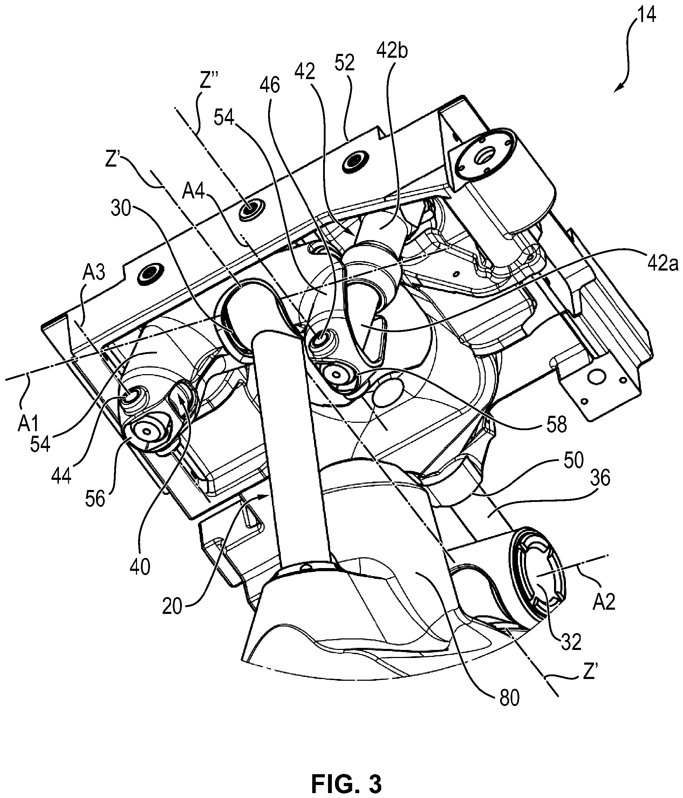

Figur 3 zeigt eine Detailansicht des in Figur 2 gezeigten Säulenkopfs 14 aus einer anderen Perspektive. Die Schwenkeinheit 52 ist in gleicher Weise wie in Fig. 2 gegenüber einer horizontalen Neutralstellung, in der zumindest die Auflagefläche der mit der Schwenkeinheit 52 verbundenen Sitzplatte 120 waagerecht angeordnet ist, d.h. weder geneigt noch gekantet ist, geneigt. Ausgehend von der Neutralstellung wurde hierfür der erste Linearstellantrieb 20 ausgefahren und der zweite Linearstellantrieb 22 in seiner unteren Endposition belassen. Darüber hinaus wurde die Schwenkeinheit 52 aus der in Fig. 2 gezeigten Endposition der Kantung in die entgegengesetzte Endposition verschwenkt, also aus der in Fig. 3 dargestellten Perspektive entgegen dem Uhrzeigersinn. Dazu wurde der vierte Linearstellantrieb 42 ausgefahren und der dritte Linearstellantrieb 40 in eine eingefahrene Position zusammengedrückt. Hierzu werden beim Ausfahren des vierten Linearstellantriebs 42 entsprechende Hydraulikventile geöffnet, so dass die Hydraulikflüssigkeit aus dem dritten Linearstellantrieb 40 abgeleitet werden kann.

Durch anschließendes Ausfahren des dritten Linearstellantriebs 40 wird die Schwenkeinheit 52 aus der in Fig. 3 gezeigten Position entgegen dem Uhrzeigersinn um die Drehachse Z" verschwenkt, wobei der vierte Linearstellantrieb 42 zusammengedrückt wird. Hierzu werden beim Ausfahren des dritten Linearstellantriebs 40 entsprechende Hydraulikventile geöffnet, so dass die Hydraulikflüssigkeit aus dem vierten Linearstellantrieb 42 abgeleitet werden kann. Dadurch lässt sich die Kantung der Patientenlagerfläche 103 einfach und unabhängig von der Neigungsverstellung einstellen. Ferner sind die Kolbenstange des vierten Linearstellantriebs 42 mit dem Bezugszeichen 42a und das Zylinderrohr des vierten Linearstellantriebs 42 mit dem Bezugszeichen 42b bezeichnet.

Des Weiteren ist in Fig. 3 die Verbindung des ersten Linearstellantriebs 20 mit der Schwenkeinheit 52 und dem Stützelement 54 über das erste Drehlager 30 gut sichtbar. Durch Ausfahren des ersten Linearstellantriebs 20 ist die Schwenkeinheit 52 zusammen mit dem Stützelement 54 um eine senkrecht zur Drehachse Z' liegende Drehachse oder um eine zur Drehachse Z' parallelen Drehachse geneigt worden.

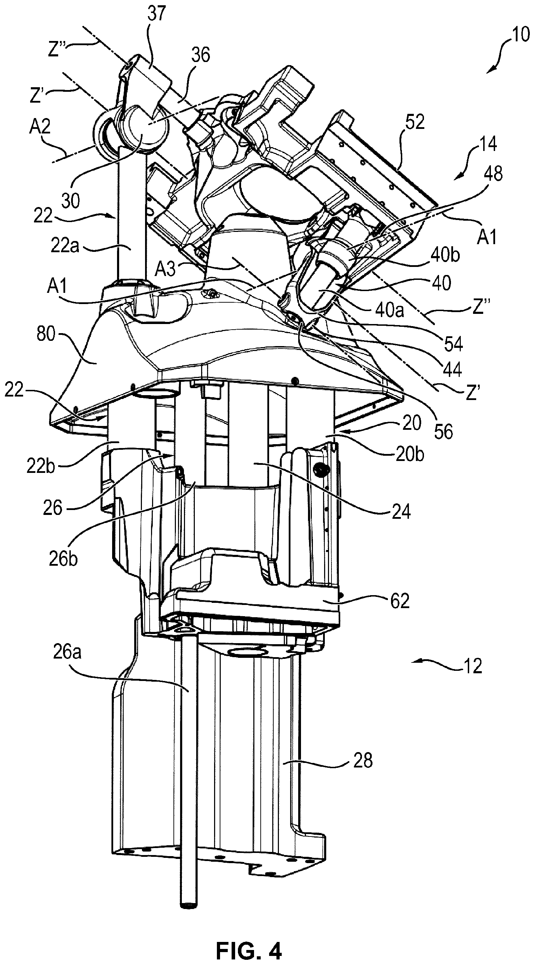

Figur 4 zeigt eine detaillierte Darstellung der Operationstischsäule 10 nach den Figuren 2 und 3, wobei der Säulenkopf 14 gegenüber Figur 2 in entgegengesetztem Drehsinn geneigt wurde.

In dieser Figur 4 ist der zweite Linearstellantrieb 22 der Operationstischsäule 10 im Vergleich zu den Figuren 2 und 3 weiter ausgefahren. Der erste Linearstellantrieb 20 ist eingefahren. Dadurch ist die Schwenkeinheit 52 in eine andere Richtung geneigt, als in den Figuren 2 und 3 zu sehen ist.

Weiterhin ist in Figur 4 das Drehlager 48, das das obere Ende des dritten Linearstellantriebs 40 mit der Schwenkeinheit 52 schwenkbar verbindet, gut sichtbar. Die Drehachse des Drehlagers 48 ist dabei parallel zur Längsachse Z' und zur Drehachse A3.

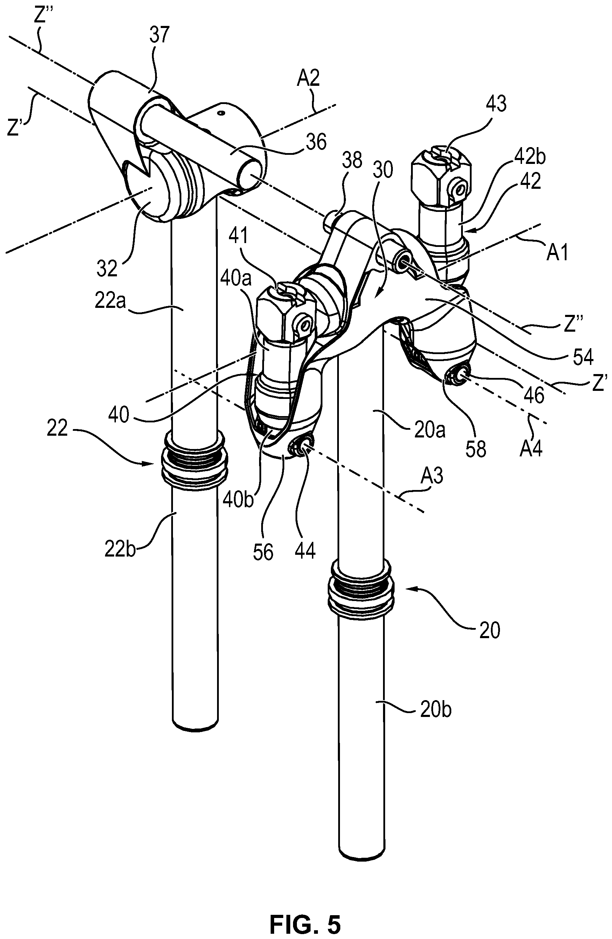

In Figur 5 sind Linearstellantriebe 20, 22, 40, 42 der Operationstischsäule 10 nach den Figuren 2 bis 4 zur Verstellung der Kantung und der Neigung gezeigt. Diese sind die wesentlichen Elemente, die die Höhenverstellung, Kantung und Neigung der Patientenlagerfläche 103 des Operationstischs 100 ermöglichen. Dargestellt ist der erste Linearstellantrieb 20, der über das erste Drehlager 30 und einen Zapfen 38 mit der in Figur 5 ausgeblendeten Schwenkeinheit 52 verbunden ist. Des Weiteren sind die oberen Enden des dritten Linearstellantriebs 40 und des vierten Linearstellantriebs 42 zu sehen, die mit der nicht dargestellten Schwenkeinheit 52 verbunden sind. Der zweite Linearstellantrieb 22 ist über das zweite Drehlager 32 und über die Aufnahmebuchse 37 mit dem Dreh- und Schiebebolzen 36 verbunden.

Der Dreh- und Schiebebolzen 36 und der Zapfen 38 sind längs der Längsachse Z" ausgerichtet und ermöglichen der nicht dargestellten Schwenkeinheit 52 eine Drehung um diese Längsachse Z" zum Einstellen der Kantung der Patientenlagerfläche 103.

Am unteren Ende des dritten Verbindungsbereichs 56 ist ein beidseitig im dritten Verbindungsbereich 56 gehaltener Zapfen vorgesehen, dessen Längsachse parallel zur Längsachse Z' ist. Der Zapfen ermöglicht das Schwenken des dritten Linearstellantriebs 40 um die Drehachse A3. Der Zapfen bildet zusammen mit dem dritten Verbindungsbereich 56 und dem unteren Ende des dritten Linearstellantriebs 40 das dritte Drehlager 44.

Am oberen Ende des dritten Linearstellantriebs 40 ist eine erste Zapfenaufnahme 41 vorgesehen, die einen Zapfen zur Verbindung des oberen Endes des dritten Linearstellantriebs 40 und der Schwenkeinheit 52 aufnehmen kann und somit ein Verschwenken des dritten Linearstellantriebs 40 relativ zur Schwenkeinheit 52 um eine zur Längsachse Z' parallelen Achse ermöglicht.

Am unteren Ende des vierten Verbindungsbereichs 58 ist ein beidseitig im vierten Verbindungsbereich 58 gehaltener Zapfen vorgesehen, dessen Längsachse parallel zur Längsachse Z' ist. Der Zapfen ermöglicht das Schwenken des vierten Linearstellantriebs 42 um die Drehachse A4. Der Zapfen bildet zusammen mit dem vierten Verbindungsbereich 58 und dem unteren Ende des vierten Linearstellantriebs 42 das vierte Drehlager 46.

Am oberen Ende des vierten Linearstellantriebs 42 ist eine zweite Zapfenaufnahme 43 vorgesehen, die einen Zapfen zur Verbindung des oberen Endes des vierten Linearstellantriebs 42 und der Schwenkeinheit 52 aufnehmen kann und somit ein Verschwenken des vierten Linearstellantriebs 42 relativ zur Schwenkeinheit 52 um eine zur Längsachse Z' parallelen Achse ermöglicht.

Der vierte Linearstellantrieb 42 wurde in Fig. 5 im Unterschied zu Fig. 4 ausgefahren und der dritte Linearstellantrieb 40 eingefahren.

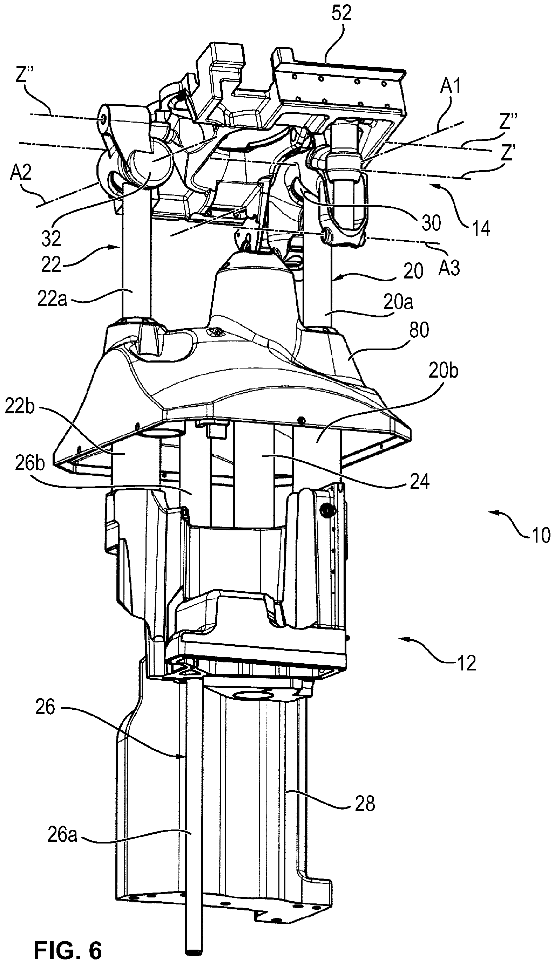

Figur 6 zeigt die Operationstischsäule 10 nach den Figuren 2 bis 5, bei der eine Höhenverstellung durch gleichzeitiges Aktivieren der zur Neigungsverstellung dienenden Linearstellantriebe 20 und 22 erfolgt ist. Ferner ist der dritte Linearstellantrieb 40 ausgefahren und der vierte Linearstellantrieb 42 eingefahren, wodurch eine entsprechende Kantung der mit der Schwenkeinheit 52 verbundenen Patientenlagerfläche 103 erfolgt.

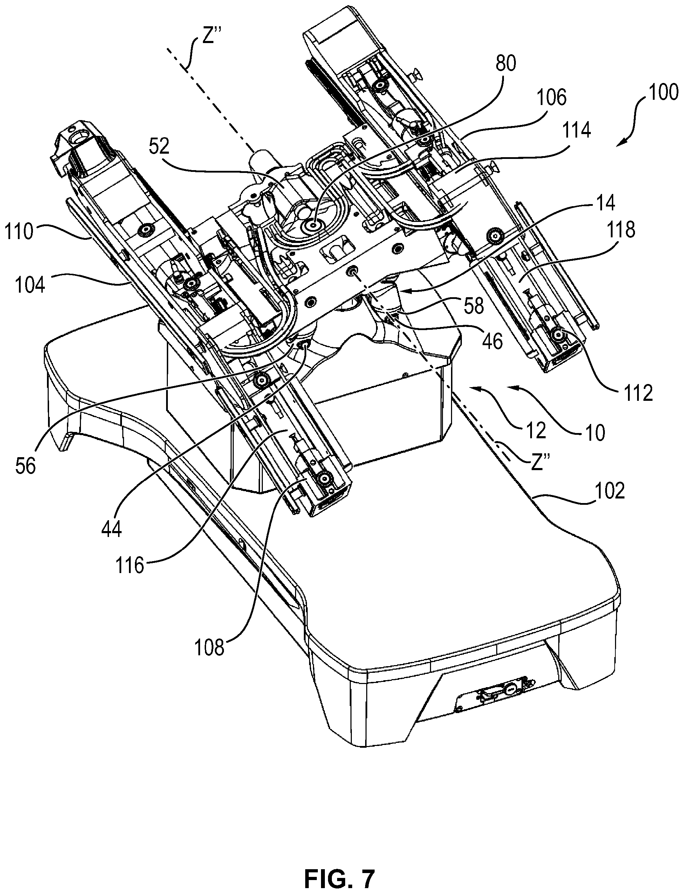

In Figur 7 ist eine detaillierte Darstellung des Operationstischs 100 nach den Figuren 1 bis 6 ohne Polsterauflagen und Anbauelementen gezeigt, wobei die äußeren Abdeckungen der Operationstischsäule 10 und des Fußes 102 dargestellt sind. Ferner sind der dritte Verbindungsbereich 56 und der vierte Verbindungsbereich 58 des Stützelements 54 sowie das dritte Drehlager 44 und das vierte Drehlager 46 sichtbar.

Ein erster Patientenlagerflächenarm 104 und ein zweiter Patientenlagerflächenarm 106 sind jeweils auf zwei gegenüberliegenden Seiten mit der Schwenkeinheit 52 verbunden. Der erste Patientenlagerflächenarm 104 hat ein erstes Segment 108 zur Auflage der Rückenplatte 122 und ein zweites Segment 110 zur Auflage der Sitzplatte 120 der Patientenlagerfläche 103. Ebenso hat der zweite Patientenlagerflächenarm 106 ein erstes Segment 112 zur Auflage der Rückenplatte 122 und ein zweites Segment 114 zur Auflage der Sitzplatte 120 der Patientenlagerfläche 103.

Über die Patientenlagerflächenarme 104 und 106 sind die Rückenplatte 122 und die Sitzplatte 120 um eine Drehachse orthogonal zur Längsachse Z der Patientenlagerfläche 103 schwenkbar zueinander angeordnet. Hierzu ist im ersten Segment 108 des ersten Patientenlagerflächenarms 104 ein erster Schwenkzylinder 116 derart angeordnet, dass er das zweite Segment 110 des ersten Patientenlagerflächenarms 104 relativ zum ersten Segment 108 verschwenken kann. Des Weiteren ist im ersten Segment 112 des zweiten Patientenlagerflächenarms 106 ein zweiter Schwenkzylinder 118 derart angeordnet, dass er das zweite Segment 114 des zweiten Patientenlagerflächenarms 106 relativ zum ersten Segment 112 verschwenken kann. Weiterhin ist die Patientenlagerfläche 103 entlang ihrer Längsachse Z verschiebbar zur Operationstischsäule 10 angeordnet.

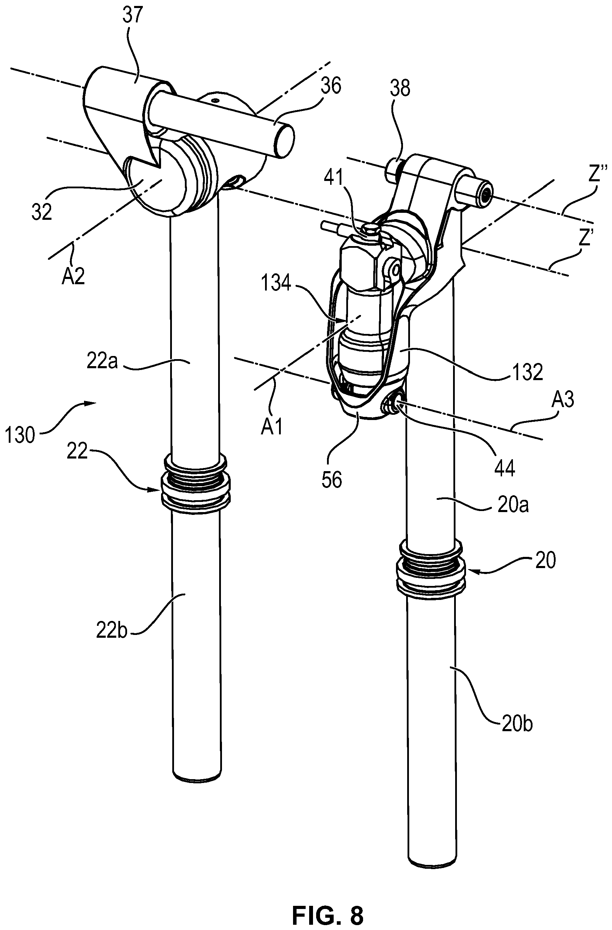

In Figur 8 sind Linearstellantriebe 20, 22, 134 einer Operationstischsäule 130 gemäß einer zweiten Ausführungsform gezeigt, die im Unterschied zur Operationstischsäule 10 der ersten Ausführungsform anstatt dem Stützelement 54 ein Stützelement 132 mit nur einem Arm hat. Der Aufbau, die Funktion und die Kopplung des Stützelements 132 stimmen sonst mit dem Aufbau, der Funktion und der Kopplung des Stützelements 54 überein. Ferner ist anstatt des dritten und des vierten Linearstellantriebs 40, 42 nur ein als doppelt wirkender Zylinder ausgeführter Linearstellantrieb 134 vorgesehen, dessen unteres Ende in gleicher Weise wie der dritte Linearstellantrieb 40 mit dem Arm des Stützelements 132 und dessen oberes Ende mit dem Kopplungselement 52 verbunden ist.

Der Aufbau und die Funktion der anderen Elemente der Operationstischsäule 130 stimmen mit der Operationstischsäule 10 der ersten Ausführungsform überein.

### Bezugszeichenliste

- 10: Operationstischsäule
- 12: Grundkörper
- 14: Säulenkopf
- 20: erster Linearstellantrieb
- 20a: Kolbenstange
- 20b: Zylinderrohr
- 22: zweiter Linearstellantrieb
- 22a: Kolbenstange
- 22b: Zylinderrohr
- 24: Führungsstab
- 26: Hubzylinder
- 26a: Kolbenstange
- 26b: Zylinderrohr
- 29: Flansch
- 30: erstes Drehlager
- 32: zweites Drehlager
- 36: Dreh- und Schiebebolzen
- 37: Aufnahmebuchse
- 38: Zapfen
- 40: dritter Linearstellantrieb
- 40a: Kolbenstange
- 40b: Zylinderrohr
- 41: erste Zapfenaufnahme
- 42: vierter Linearstellantrieb
- 42a: Kolbenstange
- 42b: Zylinderrohr
- 43: zweite Zapfenaufnahme
- 44: drittes Drehlager
- 46: viertes Drehlager
- 48: Drehlager
- 50: Lagerbuchse
- 52: Schwenkeinheit
- 54: Stützelement
- 56: dritter Verbindungsbereich
- 58: vierter Verbindungsbereich
- 62: unteres Teil des Hubschlittens
- 80: oberes Teil des Hubschlittens
- 100: Operationstisch
- 102: Fuß
- 103: Patientenlagerfläche
- 104: erster Patientenlagerflächenarm
- 106: zweiter Patientenlagerflächenarm
- 108: erstes Segment
- 110: zweites Segment
- 112: erstes Segment
- 114: zweites Segment
- 116: erster Schwenkzylinder
- 118: zweiter Schwenkzylinder
- 120: Sitzplatte
- 122: Rückenplatte
- 124: Kopfplatte
- 126: zweiteilige rechte Beinplatte
- 128: zweiteilige linke Beinplatte
- 130: weitere Operationstischsäule
- 132: einarmiges Stützelement
- 134: doppelt wirkender Linearstellantrieb
- Z: Längsachse der Patientenlagerfläche
- Z': parallele Längsachse
- Z": Längsachse des Dreh- und Schiebebolzens
- A1: erste Drehachse
- A2: zweite Drehachse
- A3: Drehachse
- A4: Drehachse

## Patentansprüche

1. Operationstischsäule (10),
mit einem Grundkörper (12) und
mit einem Säulenkopf (14), an dem eine Patientenlagerfläche (103) befestigbar ist, wobei die Operationstischsäule (10) einen ersten Linearstellantrieb (20) und einen zweiten Linearstellantrieb (22) umfasst, die zum Verändern der Lage des Säulenkopfs (14) relativ zum Grundkörper (12) unabhängig voneinander verstellbar sind, wobei der erste Linearstellantrieb (20) und der zweite Linearstellantrieb (22) jeweils derart ausgerichtet und angeordnet sind, dass sie jeweils bei ihrer Aktivierung eine in vertikaler Richtung verlaufende Stellbewegung ausführen, wobei der erste Linearstellantrieb (20) über einen ersten Verbindungsbereich (30) mit dem Säulenkopf (14) und der zweite Linearstellantrieb (22) über einen zweiten Verbindungsbereich (32) mit dem Säulenkopf (14) mechanisch verbunden sind, wobei der Säulenkopf (14) eine Längenausgleichsanordnung (36, 50) umfasst, über die der Abstand zwischen dem ersten Verbindungsbereich (30) und dem zweiten Verbindungsbereich (32) bei einer Stellbewegung des ersten Linearstellantriebs (20) und/oder des zweiten Linearstellantriebs (22) änderbar ist, wobei der erste Linearstellantrieb (20) und der zweite Linearstellantrieb (22) die einzigen kraftübertragenden Elemente zwischen dem Säulenkopf (14) und dem Grundkörper (12) sind, wobei der Säulenkopf (14) und das obere Ende des ersten Linearstellantriebs (20) im ersten Verbindungsbereich über ein erstes Drehlager (30) um eine erste Drehachse (A1) schwenkbar mechanisch verbunden sind, wobei der Säulenkopf (14) und das obere Ende des zweiten Linearstellantriebs (22) im zweiten Verbindungsbereich über ein zweites Drehlager (32) um eine zweite Drehachse (A2) schwenkbar mechanisch verbunden sind, wobei die erste Drehachse (A1) und die zweite Drehachse (A2) parallel sind, **dadurch gekennzeichnet, dass** der Säulenkopf (14) mindestens ein erstes Stützelement (54) hat, das fest mit dem ersten Drehlager (30) verbunden und um die erste Drehachse (A1) schwenkbar ist, wobei das erste Stützelement (54) mindestens einen dritten Verbindungsbereich (56) zum Verbinden eines ersten Endes eines dritten Linearstellantriebs (40) hat,
wobei ein dem ersten Ende gegenüberliegendes zweites Ende des dritten Linearstellantriebs (40) mit der Patientenlagerflächenschnittstelle (52) des Säulenkopfs (14) in Wirkverbindung steht.

2. Operationstischsäule nach Anspruch 1, **dadurch gekennzeichnet, dass** der erste Linearstellantrieb (20) und/oder der zweite Linearstellantrieb (22) die um eine Verbindungslinie zwischen dem ersten Verbindungsbereich (30) und dem zweiten Verbindungsbereich (32) wirkenden Drehmomente übertragen.

3. Operationstischsäule (10) nach Anspruch 1 oder 2, **dadurch gekennzeichnet, dass** jeweils ein unteres Ende des ersten Linearstellantriebs (20) und des zweiten Linearstellantriebs (22) fest mit dem Grundkörper (12) mechanisch verbunden sind.

4. Operationstischsäule (10) nach Anspruch 3, **dadurch gekennzeichnet, dass** das untere Ende des ersten Linearstellantriebs (20) und das untere Ende des zweiten Linearstellantriebs (22) mit einem höhenverstellbaren Teil (62, 80) des Grundkörpers (12) mechanisch verbunden sind.

5. Operationstischsäule (10) nach einem der vorhergehenden Ansprüche,
**dadurch gekennzeichnet, dass** der Säulenkopf (14) eine Schwenkeinheit (52) zum Schwenken einer mit der Schwenkeinheit (52) verbindbaren Patientenlagerfläche (103) hat,
wobei die Schwenkeinheit (52) um mindestens eine erste Drehachse (A1, A2) und um eine zweite Drehachse (Z") schwenkbar ist,
wobei die erste Drehachse (A1, A2) und die zweite Drehachse (Z") bei einer Projektion auf eine horizontale Ebene senkrecht zueinander sind, und
wobei die Längsachse (Z) der Patientenlagerfläche (103) und die erste Drehachse (A1, A2) bei einer Projektion auf eine horizontale Ebene senkrecht zueinander sind.

6. Operationstischsäule (10) nach einem der vorhergehenden Ansprüche,
**dadurch gekennzeichnet, dass** die Längsachse des ersten Linearstellantriebs (20) und die Längsachse des zweiten Linearstellantriebs (22) in Richtung der Längsachse (Z) der Patientenlagerfläche (103) beabstandet sind.

7. Operationstischsäule (10) nach einem der vorhergehenden Ansprüche, **dadurch gekennzeichnet, dass** das erste Drehlager (30) über die Längenausgleichsanordnung (36, 50) mit dem zweiten Drehlager (32) mechanisch verbunden ist,
dass die Längenausgleichsanordnung (36, 50) einen Stab (36) und ein Element mit einer Öffnung (50) umfasst, in die ein Ende des Stabes (36) zum Ändern des Abstandes zwischen dem ersten Verbindungsbereich (30) und dem zweiten Verbindungsbereich (32) bei einer Stellbewegung des ersten Linearstellantriebs (20) und/oder des zweiten Linearstellantriebs (22) hineinschiebbar und herausziehbar ist, und
dass eine an dem Säulenkopf (14) befestigbare Patientenlagerfläche (103) um die Längsachse (Z") des Stabes (36) schwenkbar ist.

8. Operationstischsäule (10) nach einem der vorhergehenden Ansprüche, **dadurch gekennzeichnet, dass** das erste Stützelement (54) einen vierten Verbindungsbereich (58) zum Verbinden eines ersten Endes eines vierten Linearstellantriebs (42) hat,
wobei das zweite Ende des dritten Linearstellantriebs (40) mit der Patientenlagerflächenschnittstelle (52) des Säulenkopfs (14) in Wirkverbindung steht und ein dem ersten Ende des vierten Linearstellantriebs (42) gegenüberliegendes zweites Ende des vierten Linearstellantriebs (42) mit der Patientenlagerflächenschnittstelle (52) des Säulenkopfs (14) in Wirkverbindung steht.

9. Operationstischsäule (10) nach einem der vorhergehenden Ansprüche, **dadurch gekennzeichnet, dass** der Säulenkopf (14) ein zweites Stützelement hat, das fest mit dem zweiten Drehlager (32) verbunden und um die zweite Drehachse (A2) schwenkbar ist, und dass das zweite Stützelement einen vierten Verbindungsbereich (58) zum Verbinden eines ersten Endes eines vierten Linearstellantriebs (42) hat,
wobei das zweite Ende des dritten Linearstellantriebs (40) mit dem Säulenkopf (14) verbunden ist und das zweite Ende des vierten Linearstellantriebs (42) mit dem Säulenkopf (14) verbunden ist.

10. Operationstischsäule (10) nach Anspruch 8 oder 9, **dadurch gekennzeichnet, dass** die Längsachse des ersten Linearstellantriebs (20) und die Längsachse des zweiten Linearstellantriebs (22) in einer vertikalen Ebene liegen,
dass der dritte Verbindungsbereich (56) zur Verbindung mit dem ersten Ende des dritten Linearstellantriebs (40) auf einer ersten Seite in einem ersten Abstand zu dieser vertikalen Ebene angeordnet ist, und
dass der vierte Verbindungsbereich (58) zur Verbindung mit dem ersten Ende des vierten Linearstellantriebs (42) auf einer der ersten Seite gegenüberliegenden zweiten Seite in einem zweiten Abstand zu dieser vertikalen Ebene angeordnet ist,
wobei der erste Abstand und der zweite Abstand vorzugsweise gleich groß sind.

11. Operationstischsäule (10) nach einem der vorhergehenden Ansprüche, **dadurch gekennzeichnet, dass** der dritte Linearstellantrieb (40) und/oder der vierte Linearstellantrieb (42) einfach wirkende Hydraulikzylinder, vorzugsweise Plungerzylinder, sind.

12. Operationstischsäule (10) nach einem der vorhergehenden Ansprüche, **dadurch gekennzeichnet, dass** der erste Linearstellantrieb (20), der zweite Linearstellantrieb (22) und/oder der dritte Linearstellantrieb(40) als ein doppelt wirkender Zylinder ausgeführt sind.

13. Operationstisch (100) mit einer Operationstischsäule (10) nach einem der vorhergehenden Ansprüche und mit einer an dem Säulenkopf (14) befestigbaren Patientenlagerfläche.

## Claims

1. An operating table column (10),
comprising a base member (12) and
comprising a column head (14) on top of which a patient support unit (103) can be secured, wherein the operating table column (10) comprises a first linear actuator (20) and a second linear actuator (22), which are independently adjustable for changing the position of the column head (14) relative to the base member (12),
wherein the first linear actuator (20) and the second linear actuator (22) are each oriented and arranged so as to perform a positioning movement in a vertical direction upon activation,
wherein the first linear actuator (20) is mechanically connected to the column head (14) via a first connecting area (30) and the second linear actuator (22) is mechanically connected to the column head (14) via a second connecting area (32),
wherein the column head (14) comprises a length adjustment assembly (36, 50), by means of which the distance between the first connecting area (30) and the second connecting area (32) can be adjusted during a positioning movement of the first linear actuator (20) and/or the second linear actuator (22),
wherein the first linear actuator (20) and the second linear actuator (22) are the only force transmitting elements between the column head (14) and the base member (12), wherein the column head (14) and the upper end of the first linear actuator (20) are mechanically connected within the first connecting area via a first pivot bearing (30) so as to be pivotable about a first rotational axis (A1),
wherein the column head (14) and the upper end of the second linear actuator (22) are mechanically connected within the second connecting area via a second pivot bearing (32) so as to be pivotable about a second rotational axis (A2),
and wherein the first rotational axis (A1) and the second rotational axis (A2) are parallel,
**characterized in that**
the column head (14) has at least one first support element (54), which is fixedly connected to the first pivot bearing (30) and is pivotable about the first rotational axis (A1),
wherein the first support element (54) has at least one third connecting area (56) for connecting a first end of a third linear actuator (40), and
wherein a second end, opposite the first end, of the third linear actuator (40) is operatively connected to the patient support unit interface (52) of the column head (14).

2. The operating table column according to claim 1, **characterized in that** the first linear actuator (20) and/or the second linear actuator (22) transmit the torques acting about a line that connects the first connecting area (30) to the second connecting area (32).

3. The operating table column (10) according to claim 1 or 2, **characterized in that** a lower end of the first linear actuator (20) and a lower end of the second linear actuator (22) are each mechanically fixedly connected to the base member (12).

4. The operating table column (10) according to claim 3, **characterized in that** the lower end of the first linear actuator (20) and the lower end of the second linear actuator (22) are mechanically connected to a height adjustable part (62, 80) of the base member (12).

5. The operating table column (10) according to any of the preceding claims, **characterized in that** the column head (14) has a pivoting unit (52) for pivoting a patient support unit (103), which can be connected to the pivoting unit (52),
wherein the pivoting unit (52) is pivotable about at least a first rotational axis (A1, A2) and about a second rotational axis (Z"),
wherein the first rotational axis (A1, A2) and the second rotational axis (Z") are perpendicular to one another when projected onto a horizontal plane, and
wherein the longitudinal axis (Z) of the patient support unit (103) and the first rotational axis (A1, A2) are perpendicular to one another when projected onto a horizontal plane.

6. The operating table column (10) according to any of the preceding claims, **characterized in that** the longitudinal axis of the first linear actuator (20) and the longitudinal axis of the second linear actuator (22) are spaced in the direction of the longitudinal axis (Z) of the patient support unit (103).

7. The operating table column (10) according to any of the preceding claims, **characterized in that** the first pivot bearing (30) is mechanically connected to the second pivot bearing (32) via the length adjustment assembly (36, 50),
**in that** the length adjustment assembly (36, 50) comprises a pin (36) and an element having an opening (50), into which one end of the pin (36) can be inserted, and out of which same pin can be withdrawn, in order to adjust the distance between the first connecting area (30) and the second connecting area (32) during a positioning movement of the first linear actuator (20) and/or the second linear actuator (22), and
**in that** a patient support unit (103) that can be secured on top of the column head (14) is pivotable about the longitudinal axis (Z") of the pin (36).

8. The operating table column (10) according to any of the preceding claims, **characterized in that** the first support element (54) has a fourth connecting area (5 8) for connecting a first end of a fourth linear actuator (42),
and wherein the second end of the third linear actuator (40) is operatively connected to the patient support unit interface (52) of the column head (14), and a second end of the fourth linear actuator (42), opposite the first end of the fourth linear actuator (42), is operatively connected to the patient support unit interface (52) of the column head (14).

9. The operating table column (10) according to any of the preceding claims, **characterized in that** the column head (14) has a second support element that is fixedly connected to the second pivot bearing (32) and is pivotable about the second rotational axis (A2), and **in that** the second support element has a fourth connecting area (58) for connecting a first end of a fourth linear actuator (42),
and wherein the second end of the third linear actuator (40) is connected to the column head (14), and the second end of the fourth linear actuator (42) is connected to the column head (14).

10. The operating table column (10) according to claim 8 or 9, **characterized in that** the longitudinal axis of the first linear actuator (20) and the longitudinal axis of the second linear actuator (22) lie within a vertical plane,
**in that** the third connecting area (56) for connection to the first end of the third linear actuator (40) is located on a first side at a first distance from said vertical plane, and
**in that** the fourth connecting area (58) for connection to the first end of the fourth linear actuator (42) is located on a second side opposite the first side at a second distance from said vertical plane,
wherein the first distance and the second distance are preferably equal.

11. The operating table column (10) according to any of the preceding claims, **characterized in that** the third linear actuator (40) and/or the fourth linear actuator (42) are single-acting hydraulic cylinders, preferably plunger cylinders.

12. The operating table column (10) according to any of the preceding claims, **characterized in that** the first linear actuator (20), the second linear actuator (22) and/or the third linear actuator (40) are each embodied as a double-acting cylinder.

13. An operating table (100) comprising an operating table column (10) according to any of the preceding claims and comprising a patient support unit that can be secured on top of the column head (14).

## Revendications

1. Colonne de table d'opération (10),
avec un corps de base (12) et
avec une tête de colonne (14), sur laquelle un panneau de lit de patient (103) peut être fixé,
dans laquelle la colonne de table d'opération (10) comporte un premier entraînement de réglage linéaire (20) et un second entraînement de réglage linéaire (22) qui peut être réglé indépendamment l'un de l'autre pour la modification de la position de la tête de colonne (14) par rapport au corps de base (12),
dans laquelle le premier entraînement de réglage linéaire (20) et le second entraînement de réglage linéaire (22) sont orientés et agencés respectivement de telle manière qu'ils réalisent respectivement lors de leur activation un mouvement de réglage s'étendant en direction verticale, dans laquelle le premier entraînement de réglage linéaire (20) est relié mécaniquement par une première zone de liaison (30) à la tête de colonne (14) et le second entraînement de réglage linéaire (22) est relié mécaniquement par une deuxième zone de liaison (32) à la tête de colonne (14),
dans laquelle la tête de colonne (14) comporte un agencement de compensation de longueur (36, 50), par lequel la distance entre la première zone de liaison (30) et la deuxième zone de liaison (32) peut être modifiée lors d'un mouvement de réglage du premier entraînement de réglage linéaire (20) et/ou du second entraînement de réglage linéaire (22),
dans laquelle le premier entraînement de réglage linéaire (20) et le second entraînement de réglage linéaire (22) sont les seuls éléments de transmission de force entre la tête de colonne (14) et le corps de base (12),
dans laquelle la tête de colonne (14) et l'extrémité supérieure du premier entraînement de réglage linéaire (20) sont reliées mécaniquement de manière pivotante dans la première zone de liaison par un premier palier rotatif (30) autour d'un premier axe de rotation (A1),
dans laquelle la tête de colonne (14) et l'extrémité supérieure du second entraînement de réglage linéaire (22) sont reliées mécaniquement de manière pivotante dans la deuxième zone de liaison par un second palier rotatif (32) autour d'un second axe de rotation (A2),
dans laquelle le premier axe de rotation (A1) et le second axe de rotation (A2) sont parallèles, **caractérisée en ce que**
la tête de colonne (14) présente au moins un premier élément d'appui (54) qui est relié fixement au premier palier rotatif (30) et peut être pivoté autour du premier axe de rotation (A1),
dans laquelle le premier élément d'appui (54) présente au moins une troisième zone de liaison (56) pour la liaison d'une première extrémité d'un troisième entraînement de réglage linéaire (40),
dans laquelle une seconde extrémité en regard de la première extrémité du troisième entraînement de réglage linéaire (40) est en liaison active avec l'interface de panneau de lit de patient (52) de la tête de colonne (14).

2. Colonne de table d'opération selon la revendication 1, **caractérisée en ce que** le premier entraînement de réglage linéaire (20) et/ou le second entraînement de réglage linéaire (22) transmettent les couples agissant autour d'une ligne de liaison entre la première zone de liaison (30) et la deuxième zone de liaison (32).

3. Colonne de table d'opération (10) selon la revendication 1 ou 2, **caractérisée en ce que** respectivement une extrémité inférieure du premier entraînement de réglage linéaire (20) et du second entraînement de réglage linéaire (22) sont reliées mécaniquement fixement au corps de base (12).

4. Colonne de table d'opération (10) selon la revendication 3, **caractérisée en ce que** l'extrémité inférieure du premier entraînement de réglage linéaire (20) et l'extrémité inférieure du second entraînement de réglage linéaire (22) sont reliées mécaniquement à une partie réglable en hauteur (62, 80) du corps de base (12).

5. Colonne de table d'opération (10) selon l'une des revendications précédentes, **caractérisée en ce que** la tête de colonne (14) présente une unité de pivotement (52) pour le pivotement d'un panneau de lit de patient (103) reliable à l'unité de pivotement (52),
dans laquelle l'unité de pivotement (52) peut être pivotée autour d'au moins un premier axe de rotation (A1, A2) et autour d'un second axe de rotation (Z"),
dans laquelle le premier axe de rotation (A1, A2) et le second axe de rotation (Z") sont perpendiculaires l'un à l'autre lors d'une projection sur un plan horizontal et dans laquelle l'axe longitudinal (Z) du panneau de lit de patient (103) et le premier axe de rotation (A1, A2) sont perpendiculaires l'un à l'autre lors d'une projection sur un plan horizontal.

6. Colonne de table d'opération (10) selon l'une des revendications précédentes, **caractérisée en ce que** l'axe longitudinal du premier entraînement de réglage linéaire (20) et l'axe longitudinal du second entraînement de réglage linéaire (22) sont espacés en direction de l'axe longitudinal (Z) du panneau de lit de patient (103).

7. Colonne de table d'opération (10) selon l'une des revendications précédentes, **caractérisée en ce que** le premier palier rotatif (30) est relié mécaniquement par l'agencement de compensation de longueur (36, 50) au second palier rotatif (32),
l'agencement de compensation de longueur (36, 50) comporte une barre (36) et un élément avec une ouverture (50), dans laquelle une extrémité de la barre (36) peut être poussée et retirée pour la modification de la distance entre la première zone de liaison (30) et la deuxième zone de liaison (32) lors d'un mouvement de réglage du premier entraînement de réglage linéaire (20) et/ou du second entraînement de réglage linéaire (22), et un panneau de lit de patient (103) pouvant être fixé sur la tête de colonne (14) peut être pivoté autour de l'axe longitudinal (Z") de la barre (36).

8. Colonne de table d'opération (10) selon l'une des revendications précédentes, **caractérisée en ce que** le premier élément d'appui (54) présente une quatrième zone de liaison (58) pour la liaison d'une première extrémité d'un quatrième entraînement de réglage linéaire (42), dans laquelle la seconde extrémité du troisième entraînement de réglage linéaire (40) est en liaison active avec l'interface de panneau de lit de patient (52) de la tête de colonne (14) et une seconde extrémité en regard de la première extrémité du quatrième entraînement de réglage linéaire (42) du quatrième entraînement de réglage linéaire (42) est en liaison active avec l'interface de panneau de lit de patient (52) de la tête de colonne (14).

9. Colonne de table d'opération (10) selon l'une des revendications précédentes, **caractérisée en ce que** la tête de colonne (14) présente un second élément d'appui qui est relié fixement au second palier rotatif (32) et peut être pivoté autour du second axe de rotation (A2), et le second élément d'appui présente une quatrième zone de liaison (58) pour la liaison d'une première extrémité d'un quatrième entraînement de réglage linéaire (42), dans laquelle la seconde extrémité du troisième entraînement de réglage linéaire (40) est reliée à la tête de colonne (14) et la seconde extrémité du quatrième entraînement de réglage linéaire (42) est reliée à la tête de colonne (14).

10. Colonne de table d'opération (10) selon la revendication 8 ou 9, **caractérisée en ce que** l'axe longitudinal du premier entraînement de réglage linéaire (20) et l'axe longitudinal du second entraînement de réglage linéaire (22) se trouvent dans un plan vertical, la troisième zone de liaison (56) est agencée pour la liaison avec la première extrémité du troisième entraînement de réglage linéaire (40) sur un premier côté dans une première distance à ce plan vertical, et
la quatrième zone de liaison (58) est agencée pour la liaison avec la première extrémité du quatrième entraînement de réglage linéaire (42) sur un second côté en regard du premier côté dans une seconde distance à ce plan vertical,
dans laquelle la première distance et la seconde distance sont de préférence de même taille.

11. Colonne de table d'opération (10) selon l'une des revendications précédentes, **caractérisée en ce que** le troisième entraînement de réglage linéaire (40) et/ou le quatrième entraînement de réglage linéaire (42) sont des vérins hydrauliques à simple action, de préférence des vérins plongeurs.

12. Colonne de table d'opération (10) selon l'une des revendications précédentes, **caractérisée en ce que** le premier entraînement de réglage linéaire (20), le deuxième entraînement de réglage linéaire (22) et/ou le troisième entraînement de réglage linéaire (40) sont réalisés comme un vérin à double action.

13. Table d'opération (100) avec une colonne de table d'opération (10) selon l'une des revendications précédentes et avec un panneau de lit de patient pouvant être fixé sur la tête de colonne (14).
